# EUROPÄISCHE PATENTSCHRIFT

(11) **EP 2 637 888 B1**
(45) Veröffentlichungstag und Bekanntmachung des Hinweises auf die Patenterteilung: **25.07.2018**
(21) Anmeldenummer: 11764104.3
(22) Anmeldetag: 21.09.2011
(51) Int. Cl.: H02J 50/12, H02J 50/70, B60L 11/18, B62M 6/80, B62H 1/04

(54) **LADEANORDNUNG FÜR EIN FAHRZEUG UND FAHRZEUG**
CHARGING ARRANGEMENT FOR A VEHICLE, AND VEHICLE
DISPOSITIF DE CHARGE POUR UN VÉHICULE ET VÉHICULE

(30) Priorität: 29.10.2010 DE 102010049743
(43) Veröffentlichungstag der Anmeldung: 18.09.2013
(73) Patentinhaber: Sew-Eurodrive GmbH & Co. KG, 76646 Bruchsal (DE)
(72) Erfinder: SCHWESINGER, Klaus, 76646 Bruchsal (DE)
(74) Vertreter: Tüngler, Eberhard
(86) Internationale Anmeldenummer: PCT/EP2011/004722
(87) Internationale Veröffentlichungsnummer: WO 2012/055465

(56) Entgegenhaltungen:
- EP-A1- 0 902 523
- WO-A1-2005/064764
- DE-A1- 10 029 486
- DE-A1-102009 009 214
- DE-A1-102009 013 694
- DE-U1- 20 011 534
- DE-U1-202007 012 506
- JP-A- 10 250 675

## Beschreibung

Die Erfindung betrifft eine Ladeanordnung für ein Fahrzeug und ein Fahrzeug.

Es ist allgemein bekannt, Fahrzeuge mit einem Elektroantrieb auszustatten, der eine Batterie aufweist. Zur Beladung der Batterie ist allgemein bekannt, über eine Steckverbindung Wechselstrom dem Fahrzeug zuzuführen.

**Aus der** EP 0 902 523 A1 **ist als nächstliegender Stand der Technik ein Ladesystem für ein elektromotorgetriebenes Zweirad bekannt.**

**Aus der** WO 2005/064764 A1 **ist eine Anlage mit einem induktiv versorgten Drehtisch bekannt, auf dem Elektromotoren angeordnet sind, die induktiv mit elektrischer Energie versorgt sind.**

Der Erfindung liegt daher die Aufgabe zugrunde, die Beladung von Fahrzeugen weiterzubilden.

Erfindungsgemäß wird die Aufgabe bei der Ladeanordnung für ein Fahrzeug nach den in Anspruch 1 und bei dem Fahrzeug nach den in Anspruch 13 angegebenen Merkmalen gelöst.

Wichtige Merkmale der Erfindung bei der Ladeanordnung für ein Fahrzeug sind, dass **am Fahrzeug ein Standfuß angeordnet ist, an oder in welchem eine Sekundärwicklung angeordnet ist, wobei die Sekundärwicklung induktiv koppelbar ist an einen stationär verlegten Primärleiter,**
**wobei aus der Sekundärwicklung ein Energiespeicher des Fahrzeugs beladbar ist,**
**wobei als Primärleiter zwei parallel verlegte Linienleiter vorgesehen sind, welche in einem oder mehreren Bereichen aufgeweitet verlegt sind, also in** diesem Bereich oder diesen Bereichen **einen größeren Abstand zueinander aufweisen als in den** nicht aufgeweiteten **Bereichen, wobei in dem jeweils aufgeweiteten Bereich eine Ferritplatte vorgesehen ist,**
**wobei auf der vom Fahrzeug abgewandten Seite** des Primärleiters **eine ebene Anordnung** von Ferritplatten auf einer Bodenplatte **vorgesehen ist.**

Von Vorteil ist dabei, dass keine Steckverbindung notwendig ist und somit die Sicherheit erhöht ist. Außerdem ist ein sowieso üblicherweise vorhandenes Mittel zur Erhöhung der statischen Stabilität abgeändert und somit sind nur wenige zusätzliche Teile notwendig.

Bei einer vorteilhaften Ausgestaltung ist der Standfuß bei Bodenberührung eingerichtet zur statischen Stabilisierung des Fahrzeugs im ruhenden Zustand, also zur Verbesserung der statischen Stabilität,
insbesondere wobei ohne Standfuß das nicht betriebene Fahrzeug nicht steht sondern umfällt. Von Vorteil ist dabei, dass ein Abstellen des Fahrzeuges sicher ermöglicht ist und gleichzeitig eine weitere Funktion integrierbar ist in diesem stabiliätserhöhenden Mittel.

Bei einer vorteilhaften Ausgestaltung ist der Standfuß über ein Drehgelenk am Rahmen des Fahrzeuges gelagert, wobei in einer ersten Drehstellung der Standfuß und die Sekundärwicklung einen größeren Abstand vom Boden aufweisen als in einer zweiten Drehstellung,
insbesondere so dass die induktive Kopplung der Sekundärwicklung an einen am oder im Boden vorgesehenen Primärleiter in der zweiten Drehstellung entsprechend stark und in der ersten Drehstellung entsprechend schwach oder sogar im Wesentlichen verschwindend klein ist. Von Vorteil ist dabei, dass nur beim Abstellen eine Energiezufuhr ermöglicht ist. Somit fungiert das Drehgelenk auch als Schaltmittel zum Trennen des Energieflusses.

Bei einer vorteilhaften Ausgestaltung weist das Fahrzeug einen aus einem Energiespeicher versorgbaren Elektromotor auf, wobei der Energiespeicher aus der Sekundärwicklung mit Energie beladbar ist. Von Vorteil ist dabei, dass die Umwelt entlastet wird, da kein Verbrennungsmotor notwendig ist.

Bei einer vorteilhaften Ausgestaltung ist der Sekundärwicklung eine Kapazität derart in Reihe oder parallel zugeschaltet, dass die zugehörige Resonanzfrequenz des so gebildeten Schwingkreises im Wesentlichen einer Frequenz eines in den Primärleiter eingeprägten Wechselstromes entspricht. Von Vorteil ist dabei, dass der Wirkungsgrad erhöhbar ist. Mittels der resonanten Übertragung ist ein geringere Beeinflussung der Kopplung bei Abstandsänderungen ermöglicht, insbesondere Positionsverschiebungen aus der optimalen Position, wobei die optimale Position diejenige Position ist, welche die maximale induktive Kopplung aufweist.

Bei einer vorteilhaften Ausgestaltung ist die Sekundärwicklung um einen Ferrit herum angeordnet ist. Von Vorteil ist dabei, dass ebenfalls der Wirkungsgrad erhöhbar ist.

Bei einer vorteilhaften Ausgestaltung ist der Primärleiter derart im Boden verlegt, dass ein aus dem Boden in Richtung des Fahrzeuges austretender Magnetfluss erzeugt ist,
insbesondere welcher bei Abstellen des Standfusses im Bereich starker induktiver Kopplung zwischen Sekundärwicklung und Primärwicklung im Wesentlichen dem von der Sekundärwicklung zumindest teilweise umgebenen, im Standfuß angeordneten Ferrit zugeführt wird. Von Vorteil ist dabei, dass der Wirkungsgrad weiter verbesserbar ist und somit auch ein schnelles Beladen ermöglicht ist.

Bei einer vorteilhaften Ausgestaltung ist der Standfuß mit einem Aufnahmeteil verbunden, wobei eine Dichtung zwischengeordnet ist. Von Vorteil ist dabei, dass eine Bedämpfung von mechanischen Schwingungen ermöglicht ist bei gleichzeitiger Abdichtung gegen Eindringen von Schmutz und/oder Flüssigkeiten.

Bei einer vorteilhaften Ausgestaltung ist das Aufnahmeteil über das Drehgelenk mit einem Haltemittel verbunden, das mit dem Rahmen des Fahrzeugs verbunden ist. Von Vorteil ist dabei, dass ein Abschalten der Energiezufuhr durch Betätigen des Drehgelenks ermöglicht ist. Gleichzeitig ist eine beim Abstellen notwendige Blockade des Betriebs des Fahrzeugs aufhebbar und somit der Betrieb des Fahrzeugs freigebbar.

Bei einer vorteilhaften Ausgestaltung weist der Standfuß an seinem endseitigen Bereich, insbesondere dem zur Bodenberührung vorgesehenen Bereich, eine Abdeckkappe auf, insbesondere wobei die Abdeckkappe aus Kunststoff gefertigt ist und/oder eine halbkugelförmige Ausformung aufweist,
insbesondere wobei die Abdeckkappe einen Anteil an Ferritpartikeln aufweist. Von Vorteil ist dabei, dass eine dichte Ausführung gewährleistet ist und mit den Ferritpartikeln sogar eine Verbesserung der Kopplung erreichbar ist, indem zwischen bodenverlegtem Ferrit und im Standfuß vorgesehenem Ferrit die Kopplung verbessert, also der magnetische Widerstand verringert wird.

Bei einer vorteilhaften Ausgestaltung ist am Fahrzeug, insbesondere gehäusebildend vom Aufnahmeteil umgeben, eine elektronische Schaltung vorgesehen, mittels welcher Aufmodulation und/oder Demodulation von Signalen auf beziehungsweise von einer mit der Sekundärwicklung verbundenen elektrischen Leitung ausführbar ist. Von Vorteil ist dabei, dass Daten austauschbar sind zwischen Fahrzeug und einem stationärem Rechner. Auf diese Weise ist ein Übertragen von Abrechnungs- und Identifikationsinformationen, beispielswiese Kontonummer oder dergleichen, zu Beginn der Beladung ermöglicht. Der stationäre Rechner ist somit in die Lage versetzt, nach Beendigung der Beladung eine Abrechnung zu erstellen beziehungswiese die Bezahlung der geladenen Energiemenge zu bewirken.

Bei einer vorteilhaften Ausgestaltung sind als Primärleiter zwei parallel verlegte Linienleiter vorgesehen, welche in einem oder mehreren Bereichen aufgeweitet verlegt sind, insbesondere also in diesem Bereich einen größeren Abstand zueinander aufweise als in den sonstigen Bereichen. Von Vorteil ist dabei, dass in besonders einfacher Weise ein von den ansonsten eng und parallel verlegten Primärleitern erzeugten Magnetfluss aus dem Zwischen raum zwischen den Primärleitern herauszuleiten zum Fahrzeug hin, insbesondere zum im Standfuß vorgesehenen Ferrit hin.

**Erfindungsgemäß** ist in den Bereichen ein Ferrit zwischen die Linienleiter zumindest teilweise zwischengeordnet, so dass Magnetfeldlinien in Richtung zum Fahrzeug hin austreten aus dem Ferrit. Von Vorteil ist dabei, dass eine besonders gute Kopplung und somit ein besonders hoher Wirkungsgrad erreichbar ist.

**Erfindungsgemäß** ist auf der vom Fahrzeug abgewandten Seite der Primärleiter eine ebene Anordnung von Ferritmaterial, insbesondere von Ferritplatten, vorgesehen,
insbesondere wobei die Anordnung von Ferritmaterial in einer Bodenplatte angeordnet ist, mit welcher eine Abdeckung verbunden ist, die die Anordnung und Teilbereiche der Primärleiter gehäusebildend umgibt. Von Vorteil ist dabei, dass der Streufluss verminderbar ist und der Wirkungsgrad erhöhbar ist.

Wichtige Merkmale bei dem Fahrzeug sind, dass es mit einer vorbeschriebenen Ladeanordnung mit Energie beladbar ist, wobei das Fahrzeug einen aus einem Energiespeicher versorgbaren Elektromotor aufweist, wobei der Energiespeicher aus der Sekundärwicklung aufladbar ist.

Von Vorteil ist dabei, dass eine sichere und einfache Beladung ermöglicht ist, die auch in Nassbereichen sicher anwendbar ist. Insbesondere bei Regen besteht im Vergleich zu Steckverbindern keine Gefahr von Stromschlag oder dergleichen.

Die Erfindung wird nun anhand von Abbildungen näher erläutert:

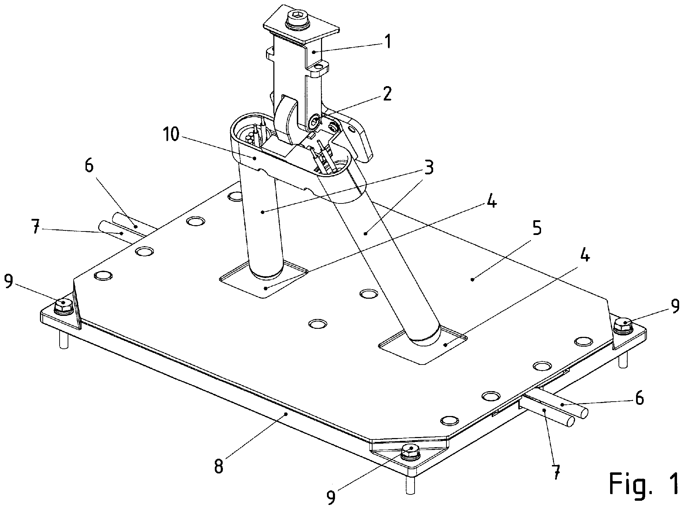

In der Figur 1 ist eine Ständeranordnung für ein Fahrzeug, insbesondere für ein Zweirad, wie Fahrrad, mit Ladeplattenanordnung in Schrägansicht gezeigt. Dabei weist dieses Fahrzeug einen Elektroantrieb, insbesondere Elektromotor auf, der aus einem Energiespeicher, wie Batterie, Akkumulator, Kondensator oder dergleichen betreibbar ist. Die Beladung des Energiespeichers erfolgt über die Ständeranordnung des Fahrzeugs in induktiver Weise, wobei das Fahrzeug eine an einen bodenverlegten Primärleiter induktiv koppelbare Sekundärwicklung aufweist.
In der Figur 2 ist die Ladeplattenanordnung in Explosionsdarstellung dargestellt.

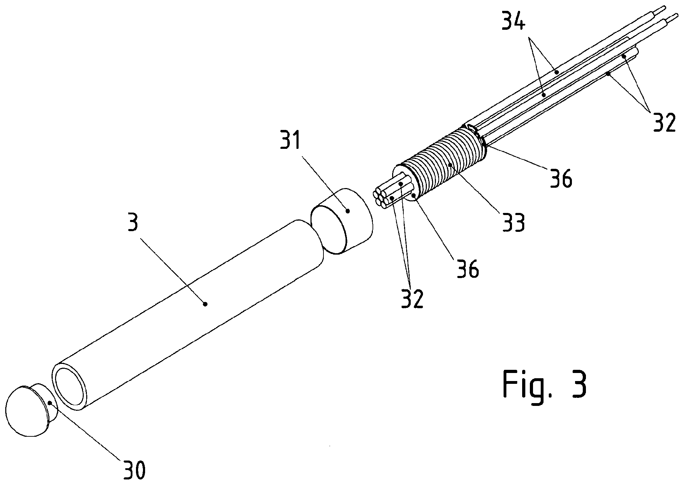

In der Figur 3 ist ein Standfuß der Ständeranordnung in Explosionsdarstellung dargestellt.

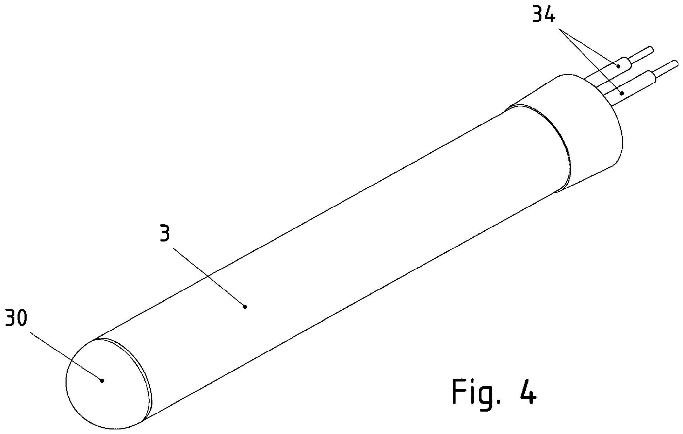

In der Figur 4 ist eine Schrägansicht auf den Standfuß gezeigt.

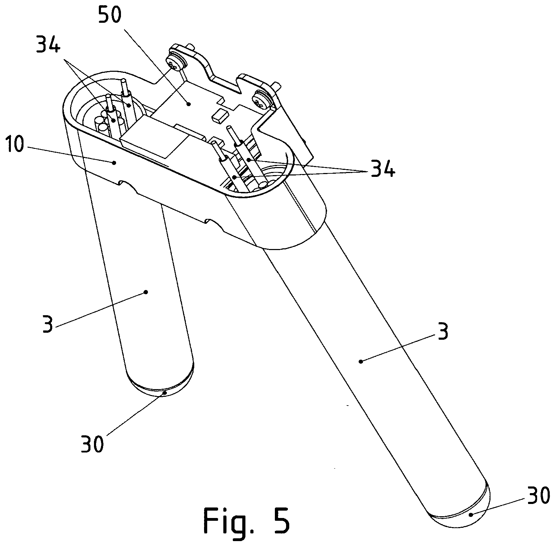

In der Figur 5 ist die Ständeranordnung in Schrägansicht gezeigt.

Dabei ist am Rahmen des Fahrzeugs die Ständeranordnung über ein Haltemittel 1 befestigt, das über ein Drehgelenk 2 mit einem Aufnahmeteil 10, insbesondere Halterahmen, drehbar verbunden ist. Am Aufnahmeteil 10 sind ein oder mehrere Standfüsse 3 befestigt.

Das Fahrzeug ist mittels der Ständeranordnung abstellbar, beispielsweise auf einem Parkplatz. Dabei stabilisiert die Ständeranordnung das abgestellte Fahrzeug.

In der Ladeplattenanordnung befindet sich eine Ausnehmung 4, insbesondere Vertiefung, in welche der Standfuß 3 mit seiner endseitigen Abdeckkappe 30 abstellbar ist. Auf diese Weise ist ein besonders starke induktive Kopplung erreichbar.

Die Abdeckung 5 der Ladeplattenanordnung ist befahrbar ausgeführt, also entsprechend stabil.

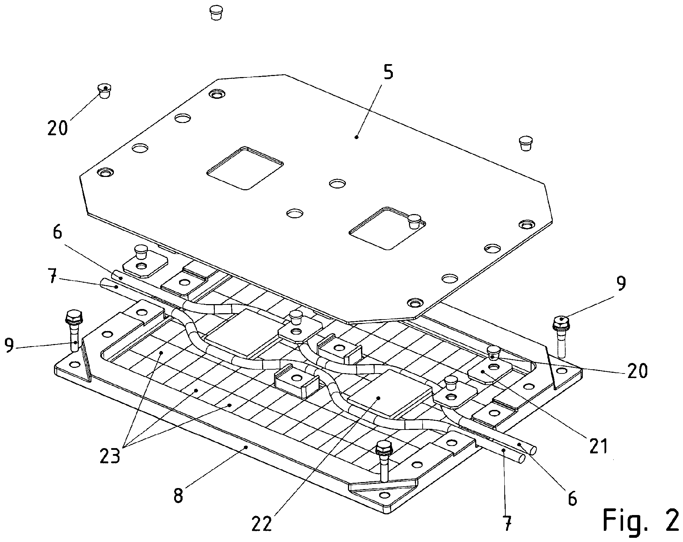

Unterhalb der Abdeckung 5, welche mittels Befestigungsstopfen 20 mit der Bodenplatte 8 verbunden ist, ist ein Teil einer langgestreckten Primärleiterschleife verlegt. Dabei ist in Figur 2 der hinführende Teil als Primärleiter 6, insbesondere Linienleiter, insbesondere Hinleiter, bezeichnet und der rückführende Teil als Primärleiter 7, insbesondere Linienleiter, insbesondere Rückleiter. Innerhalb der Ladeplattenanordnung verläuft der Abstand zwischen Hinleiter und Rückleiter entlang der Leitungslänge in zwei Bereichen aufgeweitet. Der Abstand nimmt also in jedem der Bereiche zunächst zu und dann wieder ab. In dem jeweils aufgeweiteten Bereich ist eine Ferritplatte 22 vorgesehen, die auf einer im Wesentlichen ebenen Ferritplattenanordnung, bestehend aus Ferritplatten 23, vorgesehen ist, auf welcher die Primärleiter (6, 7) verlegt sind. Halterungen 21 für die Primärleiter sind mit der Bodenplatte 8 verbunden mittels Befestigungsstopfen 20 oder alternativ mit der Abdeckung und führen die Primärleiter.

Die Abdeckung 5 ist mit der Bodenplatte 8 schraubverbunden mittels Schrauben 9.

Der Standfuß ist vorzugsweise aus glasfaserverstärktem Kunststoff oder einem anderen diamagnetischen oder paramagnetischem Material.

Zwischen Standfuß 3 und Aufnahmeteil 10 ist eine Dichtung 31 vorgesehen.

Der Standfuß 3 umgibt gehäusebildend Ferrit 32, insbesondere in Standfußerstreckungsrichtung ausgerichtet vorgesehene Ferritstäbe, wobei eine Sekundärwicklung 33 um den Ferrit 32 herum auf einem Spulenaufnahmeteil 36 angeordnet ist, wobei die Sekundärwicklung 33 innerhalb des Standfusses 3 angeordnet ist.

Bei Aufstellen des Standfusses 3 auf die Ausnehmung 4 kommen die Ferritstäbe 32 in Berührung mit der Ferritplatte 22 oder kommen dieser zumindest sehr nahe. Somit wird das durch die Aufweitung zwischen Hinleiter 6 und Rückleiter 7 durch die Ferritplatte 22 austretende Magnetfeld großen teils in die Ferritstäbe 32 geleitet und somit eine gute induktive Kopplung zwischen Primärleitersystem und Sekundärwicklung 33 erreicht. Die in der Sekundärwicklung 33 induzierte Spannung wird über die in den Kabeln 34 befindlichen elektrischen Leitungen an eine elektronische Schaltung weitergeleitet, die zumindest eine Kapazität aufweist, welche der Sekundärwicklung 33 parallel oder in Reihe zugeschaltet ist und derart dimensioniert ist, dass die zugehörige Resonanzfrequenz des so gebildeten Schwingkreises im Wesentlichen mit der in den Primärleiter eingeprägten Wechselstromfrequenz übereinstimmt.

Vorzugsweise ist die Spulenwicklung 33 vergossen ausgeführt. Außerdem ist auch die elektronische Schaltung 50 mittels Vergussmasse dicht und mechanisch fest sowie wärmeleitend verbunden mit dem Aufnahmeteil 10.

Hinleiter und Rückleiter sind an ihrem ersten Ende von einer mittelfrequenten Wechselstromquelle derart gespeist, dass ein mittelfrequenter Wechselstrom, insbesondere mit einer Frequenz zwischen 10 und 500 kHz, eingeprägt ist. An ihrem anderen Ende sind Hinleiter und Rückleiter mit einer Anpassungsimpedanz abgeschlossen oder kurzgeschlossen.

In weiteren Ausführungsbeispielen wird mit der elektronischen Schaltung 50 auch eine Aufmodulation oder Demodulation von hochfrequenten Stromanteilen ausgeführt, so dass Daten austauschbar sind über die induktive Kopplung. Die Frequenz hierbei ist höher als die obengenannte Frequenz zur Energieübertragung zum Beladen des Energiespeichers, die vorzugsweise zwischen 10 und 500 kHz beträgt.

In weiteren Ausführungsbeispielen wird statt der in Figur 2 gezeigten Aufweitung der Ferrit 22 mit einem Primärleiter umwickelt, also bei der Sekundärspulenwicklung eine Windungszahl 1 oder größer erreicht. Auch andere Verlege-Topologieen sind ermöglicht. Wichtig ist dabei nur, dass die magnetischen Feldlinien konzentriert werden mittels des Ferrits 22 und eine möglichst gute Einkopplung in den Ferrit 32 der Sekundärwicklung erreicht wird.

Wie in Figur 2 gezeigt, sind die dortigen Aufweitungen gleichförmig und erzeugen daher beide einen parallelen Magnetfluss In weiteren erfindungsgemäßen Ausführungsbeispielen sind die Primärleitungen derart um die Ferrite 22 gewickelt, also mit derartigem Wicklungssinn, dass entgegen gerichtete Magnetfelder erzeugt werden. Dies hat zum Vorteil, dass der über einen ersten Ferrit 22 eingeleitete Magnetfluss in den ersten Standfuß 3 des Fahrzeugs eingeleitete Magnetfluss über den anderen Standfuß 3 in den anderen Ferrit 22 eingeleitet wird.. Insgesamt wird also eine gegenseitige Verstärkung erreicht. Vorzugsweise ist ein weiterer Ferrit im Aufnahmeteil 10 zum Umlenken des vom Ferrit 32 des ersten Standfusses 3 austretenden Magnetfeldes in den Ferrit 32 des anderen Standfusses 3 angeordnet.

### Bezugszeichenliste

1 Haltemittel
2 Drehgelenk
3 Standfuß
4 Ausnehmung, insbesondere Vertiefung
5 Abdeckung
6 Primärleiter, insbesondere Linienleiter, insbesondere Hinleiter
7 Primärleiter, insbesondere Linienleiter, insbesondere Rückleiter
8 Bodenplatte
9 Schraube
10 Aufnahmeteil, insbesondere Halterahmen
20 Befestigungsstopfen
21 Halterung für Primärleiter
22 Ferritplatte
23 Ferritplatte
30 Abdeckkappe
31 Dichtung
32 Ferrit
33 Sekundärwicklung
34 Kabel
36 Spulenaufnahmeteil
50 Elektronische Schaltung

## Patentansprüche

1. Ladeanordnung für ein Fahrzeug,
wobei am Fahrzeug ein Standfuß (3) angeordnet ist, an oder in welchem eine Sekundärwicklung (33) angeordnet ist, wobei die Sekundärwicklung (33) induktiv koppelbar ist an einen stationär verlegten Primärleiter (6, 7),
wobei aus der Sekundärwicklung (33) ein Energiespeicher des Fahrzeugs beladbar ist, **dadurch gekennzeichnet, dass**
als Primärleiter (6, 7) zwei parallel verlegte Linienleiter vorgesehen sind, welche in einem oder mehreren Bereichen aufgeweitet verlegt sind, also in diesem Bereich oder diesen Bereichen einen größeren Abstand zueinander aufweisen als in den nicht aufgeweiteten Bereichen, wobei in dem jeweils aufgeweiteten Bereich eine Ferritplatte (22, 23) vorgesehen ist,
wobei auf der vom Fahrzeug abgewandten Seite des Primärleiters (6, 7) eine ebene Anordnung von Ferritplatten (22, 23) auf einer Bodenplatte (8) vorgesehen ist.

2. Ladeanordnung nach Anspruch 1,
**dadurch gekennzeichnet, dass**
der Standfuß (3) bei Bodenberührung eingerichtet ist zur statischen Stabilisierung des Fahrzeugs im ruhenden Zustand, also zur Verbesserung der statischen Stabilität,
insbesondere wobei ohne Standfuß (3) das nicht betriebene Fahrzeug nicht steht sondern umfällt.

3. Ladeanordnung nach mindestens einem der vorangegangenen Ansprüche,
**dadurch gekennzeichnet, dass**
der Standfuß (3) über ein Drehgelenk (2) am Rahmen des Fahrzeuges gelagert ist, wobei in einer ersten Drehstellung der Standfuß (3) und die Sekundärwicklung (33) einen größeren Abstand vom Boden aufweisen als in einer zweiten Drehstellung,
insbesondere so dass die induktive Kopplung der Sekundärwicklung (33) an einen am oder im Boden vorgesehenen Primärleiter (6, 7) in der zweiten Drehstellung entsprechend stark und in der ersten Drehstellung entsprechend schwach oder sogar im Wesentlichen verschwindend klein ist.

4. Ladeanordnung nach mindestens einem der vorangegangenen Ansprüche,
**dadurch gekennzeichnet, dass**
das Fahrzeug einen aus einem Energiespeicher versorgbaren Elektromotor aufweist, wobei der Energiespeicher aus der Sekundärwicklung (33) mit Energie beladbar ist.

5. Ladeanordnung nach mindestens einem der vorangegangenen Ansprüche,
**dadurch gekennzeichnet, dass**
der Sekundärwicklung (33) eine Kapazität derart in Reihe oder parallel zugeschaltet ist, dass die zugehörige Resonanzfrequenz des so gebildeten Schwingkreises im Wesentlichen einer Frequenz eines in den Primärleiter (6, 7) eingeprägten Wechselstromes entspricht.

6. Ladeanordnung nach mindestens einem der vorangegangenen Ansprüche,
**dadurch gekennzeichnet, dass**
die Sekundärwicklung (33) um einen Ferrit (32) herum angeordnet ist.

7. Ladeanordnung nach mindestens einem der vorangegangenen Ansprüche,
**dadurch gekennzeichnet, dass**
der Primärleiter (6, 7) derart im Boden verlegt ist, dass ein aus dem Boden in Richtung des Fahrzeuges austretender Magnetfluss erzeugt ist,
insbesondere welcher bei Abstellen des Standfusses im Bereich starker induktiver Kopplung zwischen Sekundärwicklung (33) und Primärwicklung im Wesentlichen dem von der Sekundärwicklung (33) zumindest teilweise umgebenen, im Standfuß (3) angeordneten Ferrit (32) zugeführt wird.

8. Ladeanordnung nach mindestens einem der vorangegangenen Ansprüche,
**dadurch gekennzeichnet, dass**
der Standfuß (3) mit einem Aufnahmeteil (10) verbunden ist, wobei eine Dichtung (31) zwischengeordnet ist.

9. Ladeanordnung nach mindestens einem der vorangegangenen Ansprüche,
**dadurch gekennzeichnet, dass**
das Aufnahmeteil (10) über das Drehgelenk (2) mit einem Haltemittel (1) verbunden ist, das mit dem Rahmen des Fahrzeugs verbunden ist.

10. Ladeanordnung nach mindestens einem der vorangegangenen Ansprüche,
**dadurch gekennzeichnet, dass**
der Standfuß (3) an seinem endseitigen Bereich, insbesondere dem zur Bodenberührung vorgesehenen Bereich, eine Abdeckkappe (30) aufweist, insbesondere wobei die Abdeckkappe (30) aus Kunststoff gefertigt ist und/oder eine halbkugelförmige Ausformung aufweist,
insbesondere wobei die Abdeckkappe (30) einen Anteil an Ferritpartikeln aufweist.

11. Ladeanordnung nach mindestens einem der vorangegangenen Ansprüche,
**dadurch gekennzeichnet, dass**
am Fahrzeug, insbesondere gehäusebildend vom Aufnahmeteil (10) umgeben, eine elektronische Schaltung vorgesehen ist, mittels welcher Aufmodulation und/oder Demodulation von Signalen auf beziehungsweise von einer mit der Sekundärwicklung (33) verbundenen elektrischen Leitung ausführbar ist.

12. Ladeanordnung nach mindestens einem der vorangegangenen Ansprüche, **dadurch gekennzeichnet, dass**
die Anordnung von Ferritmaterial in der Bodenplatte (8) angeordnet ist, mit welcher eine Abdeckung (5) verbunden ist, die die Anordnung und Teilbereiche der Primärleiter (6, 7) gehäusebildend umgibt.

13. Fahrzeug, welches mittels einer Ladeanordnung nach mindestens einem der vorangegangenen Ansprüche mit Energie beladbar ist,
**dadurch gekennzeichnet, dass**
das Fahrzeug einen aus einem Energiespeicher versorgbaren Elektromotor aufweist, wobei der Energiespeicher aus der Sekundärwicklung (33) aufladbar ist.

## Claims

1. Charging arrangement for a vehicle, wherein a stand (3) is arranged on the vehicle, a secondary winding (33) being arranged on or in said stand, wherein the secondary winding (33) can be inductively coupled to a primary conductor (6, 7) which is laid in a stationary manner, wherein an energy storage means of the vehicle can be charged from the secondary winding (33), **characterized in that** two line conductors which are laid in parallel are provided as the primary conductor (6, 7), said line conductors being laid in a widened manner in one or more regions, that is to say being spaced apart from one another by a greater distance in this region or these regions than in the non-widened regions, wherein a ferrite plate (22, 23) is provided in the respective widened region, wherein a planar arrangement of ferrite plates (22, 23) on a baseplate (8) is provided on the side of the primary conductor (6, 7) remote from the vehicle.

2. Charging arrangement according to claim 1, **characterized in that** the stand (3), upon contact with the ground, is designed to statically stabilize the vehicle in the rest state, that is to say to improve the static stability, in particular wherein, without the stand (3), the unoperated vehicle does not remain upright but rather falls over.

3. Charging arrangement according to at least one of the preceding claims, **characterized in that** the stand (3) is mounted on the frame of the vehicle via a swivel joint (2), wherein the stand (3) and the secondary winding (33) are at a greater distance from the ground in a first rotary position of the stand (3) than in a second rotary position, in particular so that the inductive coupling of the secondary winding (33) to a primary conductor (6, 7) provided on or in the ground is suitably strong in the second rotary position and is suitably weak or even substantially imperceptibly small in the first rotary position.

4. Charging arrangement according to at least one of the preceding claims, **characterized in that** the vehicle has an electric motor which can be supplied from an energy storage means, wherein the energy storage means can be charged with energy from the secondary winding (33).

5. Charging arrangement according to at least one of the preceding claims, **characterized in that** a capacitance is connected in series or in parallel with the secondary winding (33) such that the associated resonant frequency of the resonant circuit thus formed substantially corresponds to a frequency of an alternating current impressed in the primary conductor (6, 7).

6. Charging arrangement according to at least one of the preceding claims, **characterized in that** the secondary winding (33) is arranged around a ferrite (32).

7. Charging arrangement according to at least one of the preceding claims, **characterized in that** the primary conductor (6, 7) is laid in the ground in such a way that a magnetic flux is generated from the ground towards the vehicle, in particular which magnetic flux, when the stand is set down in the region of strong inductive coupling between the secondary winding (33) and the primary winding, is substantially fed to the ferrite (32) which is arranged in the stand (3) and which is at least partially surrounded by the secondary winding (33) .

8. Charging arrangement according to at least one of the preceding claims, **characterized in that** the stand (3) is connected to a holding part (10), a seal (31) being arranged therebetween.

9. Charging arrangement according to at least one of the preceding claims, **characterized in that** the holding part (10) is connected via the rotary joint (2) to a retaining means (1) which is connected to the frame of the vehicle.

10. Charging arrangement according to at least one of the preceding claims, **characterized in that** the stand (3) has a covering cap (30) at the end region thereof, in particular the region provided for contact with the ground, in particular wherein the covering cap (30) is made of plastic and/or has a hemispherical shape, in particular wherein the covering cap (30) contains ferrite particles.

11. Charging arrangement according to at least one of the preceding claims, **characterized in that** an electronic circuit is provided on the vehicle, in particular in a manner enclosed by the holding part (10) in such a way as to form a housing, by means of which electronic circuit it is possible to modulate and/or demodulate signals to and/or from an electrical line connected to the secondary winding (33).

12. Charging arrangement according to at least one of the preceding claims, **characterized in that** the arrangement of ferrite material is arranged in the baseplate (8), to which a cover (5) is connected, said cover enclosing the arrangement and sub-regions of the primary conductors (6, 7) in such a way as to form a housing.

13. Vehicle which can be charged with energy by means of a charging arrangement according to at least one of the preceding claims, **characterized in that** the vehicle has an electric motor which can be supplied from an energy storage means, wherein the energy storage means can be charged from the secondary winding (33).

## Revendications

1. Dispositif de mise en charge destiné à un véhicule,
un pied de support (3), sur ou dans lequel un enroulement secondaire (33) est mis en place, étant installé sur ledit véhicule, ledit enroulement secondaire (33) pouvant être couplé par induction à un conducteur primaire (6, 7) à implantation fixe,
un accumulateur d'énergie dudit véhicule pouvant être chargé à partir dudit enroulement secondaire (33),
**caractérisé par le fait que**
deux conducteurs de ligne agencés parallèlement, prévus en tant que conducteur primaire (6, 7), sont posés de manière éployée dans une ou plusieurs région(s), c'est-à-dire qu'ils sont éloignés l'un de l'autre, dans cette ou ces région(s), d'une plus grande distance que dans les régions non éployées,
une plaquette de ferrite (22, 23) étant respectivement prévue dans la région éployée, sachant qu'un ensemble de plaquettes de ferrite (22, 23), de configuration plane, est prévu sur une platine de fond (8) du côté dudit conducteur primaire (6, 7) qui est tourné à l'opposé du véhicule.

2. Dispositif de mise en charge selon la revendication 1,
**caractérisé par le fait que**
le pied de support (3) est réalisé en vue de la stabilisation statique du véhicule au repos, c'est-à-dire en vue d'améliorer la stabilité statique lors d'un contact avec le sol,
sachant notamment que ledit véhicule non actionné ne se tient pas dressé, mais se renverse en l'absence d'un pied de support (3).

3. Dispositif de mise en charge selon au moins l'une des revendications précédentes,
**caractérisé par le fait que**
le pied de support (3) est monté sur le châssis du véhicule par l'intermédiaire d'une articulation tournante (2), sachant que, dans une première position prise par rotation, ledit pied de support (3) et l'enroulement secondaire (33) sont plus éloignés du sol que dans une seconde position prise par rotation,
en particulier de façon telle que le couplage inductif dudit enroulement secondaire (33), avec un conducteur primaire (6, 7) prévu sur ou dans le sol, soit conséquemment fort dans ladite seconde position prise par rotation et soit conséquemment faible, voire même pour l'essentiel infime dans ladite première position prise par rotation.

4. Dispositif de mise en charge selon au moins l'une des revendications précédentes,
**caractérisé par le fait que**
le véhicule comporte un moteur électrique pouvant être alimenté à partir d'un accumulateur d'énergie, ledit accumulateur d'énergie pouvant être chargé en énergie à partir de l'enroulement secondaire (33).

5. Dispositif de mise en charge selon au moins l'une des revendications précédentes,
**caractérisé par le fait**
**qu'**un condensateur est branché en série ou en parallèle avec l'enroulement secondaire (33), de telle sorte que la fréquence de résonance associée du circuit oscillant ainsi formé corresponde, pour l'essentiel, à une fréquence d'un courant alternatif injecté dans le conducteur primaire (6, 7).

6. Dispositif de mise en charge selon au moins l'une des revendications précédentes,
**caractérisé par le fait que**
l'enroulement secondaire (33) enlace la périphérie d'une ferrite (32).

7. Dispositif de mise en charge selon au moins l'une des revendications précédentes,
**caractérisé par le fait que**
le conducteur primaire (6, 7) est posé dans le sol d'une manière propre à engendrer, en direction du véhicule, un flux magnétique qui émane du sol et
qui, lors d'un remisage du pied de support, est notamment délivré, en substance, à la ferrite (32) logée dans ledit pied de support (3) et au moins partiellement entourée par l'enroulement secondaire (33), dans la zone de fort couplage inductif entre ledit enroulement secondaire (33) et l'enroulement primaire.

8. Dispositif de mise en charge selon au moins l'une des revendications précédentes,
**caractérisé par le fait que**
le pied de support (3) est relié à une partie réceptrice (10), avec interposition d'une garniture d'étanchement (31).

9. Dispositif de mise en charge selon au moins l'une des revendications précédentes,
**caractérisé par le fait que**
la partie réceptrice (10) est reliée, par l'intermédiaire de l'articulation tournante (2), à un moyen de retenue (1) relié au châssis du véhicule.

10. Dispositif de mise en charge selon au moins l'une des revendications précédentes,
**caractérisé par le fait que**
le pied de support (3) est pourvu d'un capuchon de recouvrement (30) au niveau de sa région extrême, en particulier de la région prévue pour un contact avec le sol, ledit capuchon de recouvrement (30) étant fabriqué en matière plastique et/ou présentant une configuration hémisphérique,
sachant notamment que ledit capuchon de recouvrement (30) renferme une proportion de particules de ferrite.

11. Dispositif de mise en charge selon au moins l'une des revendications précédentes,
**caractérisé par le fait**
**qu'**il est prévu, sur le véhicule, un circuit électronique entouré par la partie réceptrice (10), avec formation d'un boîtier, et au moyen duquel peu(ven)t être exécutée(s) une modulation et/ou une démodulation de signaux en direction ou, respectivement, en provenance d'un conducteur électrique connecté à l'enroulement secondaire (33).

12. Dispositif de mise en charge selon au moins l'une des revendications précédentes,
**caractérisé par le fait que**
l'ensemble constitué de ferrite est logé dans la platine de fond (8)
à laquelle est reliée une coiffe (5) qui entoure, avec formation d'un boîtier, ledit ensemble et des régions partielles des conducteurs primaires (6, 7).

13. Véhicule pouvant être alimenté en énergie au moyen d'un dispositif de mise en charge conforme à au moins l'une des revendications précédentes,
**caractérisé par le fait que**
ledit véhicule comporte un moteur électrique pouvant être alimenté à partir d'un accumulateur d'énergie, ledit accumulateur d'énergie pouvant être chargé à partir de l'enroulement secondaire (33).
